# FASCICULE DE BREVET EUROPEEN

(11) **EP 0 844 162 B1**
(45) Date de publication et mention de la délivrance du brevet: **21.03.2001**
(21) Numéro de dépôt: 97107249.1
(22) Date de dépôt: 02.05.1997
(51) Int. Cl.: B61K 9/10, G01N 29/28

(54) **Dispositif de mesure des défauts internes d'un rail par ultrasons**
Ultraschall- Messvorrichtung für interne Fehler einer Schiene
Ultrasonic measuring device of internal faults of a rail

(30) Priorité: 25.11.1996 CH 289896
(43) Date de publication de la demande: 27.05.1998
(73) Titulaire: SPENO INTERNATIONAL SA, 1211 Genève 21 (CH)
(72) Inventeur: Jaeggi, Jean-Pierre, 1205 Geneve (CH)
(74) Mandataire: Micheli & Cie

(56) Documents cités:
- EP-A- 0 622 629
- AU-B- 483 896
- DE-A- 3 424 386

## Description

La présente invention concerne un dispositif selon le préambule de la revendication 1, pour la mesure ou la détection de défauts internes des rails d'une voie ferrée et plus particulièrement un dispositif à ultrasons adapté à travailler en continu sur les rails. Des dispositifs pour l'analyse d'un corps à l'aide d'un faisceau d'ultrasons sont bien connus et ils sont utilisés pour la détection et la mesure de défauts internes des rails d'une voie ferrée soit en contenu in situ, soit en atelier. Selon ce principe un faisceau d'ultrasons est émis en direction du rail à partir d'une sonde placée sur la surface supérieure du rail, l'énergie est réfléchie par le rail et ses défauts internes sont alors détectés et mesurés par des circuits électroniques appropriés. Les brevets US 4689995, US 4700574 et EP 0374395 décrivent des méthodes de mesure et des dispositifs pour leur mise en oeuvre.

Pour obtenir une mesure fiable il est essentiel d'assurer un bon contact acoustique entre la sonde et le rail. La position géométrique de la voie n'est jamais parfaite et un mauvais alignement des rails, des déformations ponctuelles des rails, ou les discontinuités de la voie dans les aiguilles par exemple, provoquent des sauts des sondes sur le rail et donc des pertes de contact acoustiques ce qui entraîne évidemment des perturbations dans la détection et la mesure des défauts des rails. Ces perturbations sont d'autant plus importantes que la vitesse de déplacement du véhicule portant les sondes est grande.

Les chariots de mesure existants de ce type comportent jusqu'à une douzaine de sondes par file de rails pour permette une vérification complète de tous les défauts du rail. Ces sondes sont généralement portées par une poutre commune entraînée et guidée le long du rail à l'aide de moyens adéquats. Du fait de la masse et de la longueur de cette poutre il est extrêmement difficile, voire impossible, de garantir un contact sonde-rail parfait à tout moment, de sorte que ces dispositifs ne peuvent travailler qu'à des vitesses très limitées, inférieures à 20 Km/h par exemple.

Des dispositifs de mesure ont été développés tels que celui décrit dans le brevet US 5522265 dans lequel les sondes sont placées dans des logements d'un patin et sont montées déplaçables en hauteur par rapport à ce patin tout en étant appliquées contre la surface du rail par une force déterminée. Ceci empêche les rebonds des sondes et améliore le contact sonore entre les sondes et le rail. Il en résulte que la vitesse de travail peut être augmentée.

Néanmoins avec de tels dispositifs les sondes sont toujours en contact direct avec le rail elles subissent donc une usure importante et peuvent être endommagées sérieusement par des bavures ou ondulations prononcées de la surface du rail. Ainsi, la durée de vie de telles sondes est très courte, il faut les changer fréquemment ce qui entraîne des coûts élevés et des arrêts de travail longs et fréquents.

La présente invention a ainsi pour but la réalisation d'un dispositif pour la détection et/ou la mesure par ultrasons des défauts internes des rails d'une voie ferrée qui puisse être entraîné à grande vitesse le long de la voie à mesurer et dont les sondes ultrasonores soient protégées des chocs et des aspérités ou irrégularités de la surface du champignon du rail de manière à prolonger de façon significative leur fiabilité et leur durée de vie. Un autre but de la présente invention est également d'augmenter la fiabilité et la précision de la détection et de la mesure des défauts internes des rails auscultés.

Le dispositif de détection et/ou de mesure par ultrasons des défauts d'un rail d'une voie ferrée selon l'invention se distingue par les caractéristiques énumérées à la revendication 1.

Le dessin illustre schématiquement et à titre d'exemple une forme d'exécution du dispositif selon l'invention.

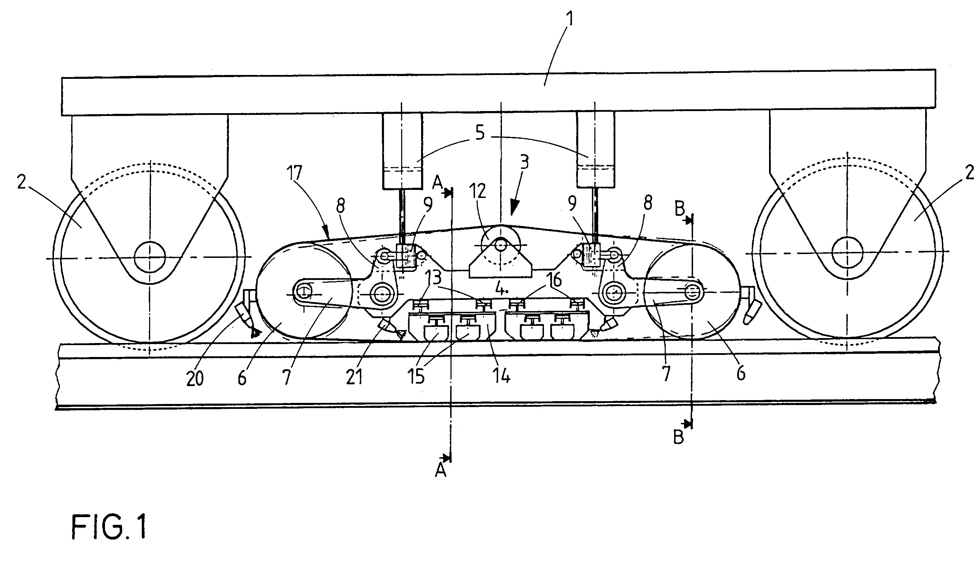

La figure 1 est une vue schématique d'un chariot porteur destiné à être monté sous un véhicule ferroviaire muni d'un dispositif de détection et/ou de mesure selon l'invention.

La figure 2 est une vue en coupe à plus grande échelle d'un support porte-sonde du dispositif.

La figure 3 est une vue partielle à plus grande échelle du cadre du dispositif.

La figure 4 est un détail à plus grande échelle montrant l'engrênement de la courroie sur un galet.

La figure 5 est une coupe partielle à plus grande échelle suivant la ligne B-B de la figure 1.

La figure 6 est un détail à plus grande échelle de la figure 5.

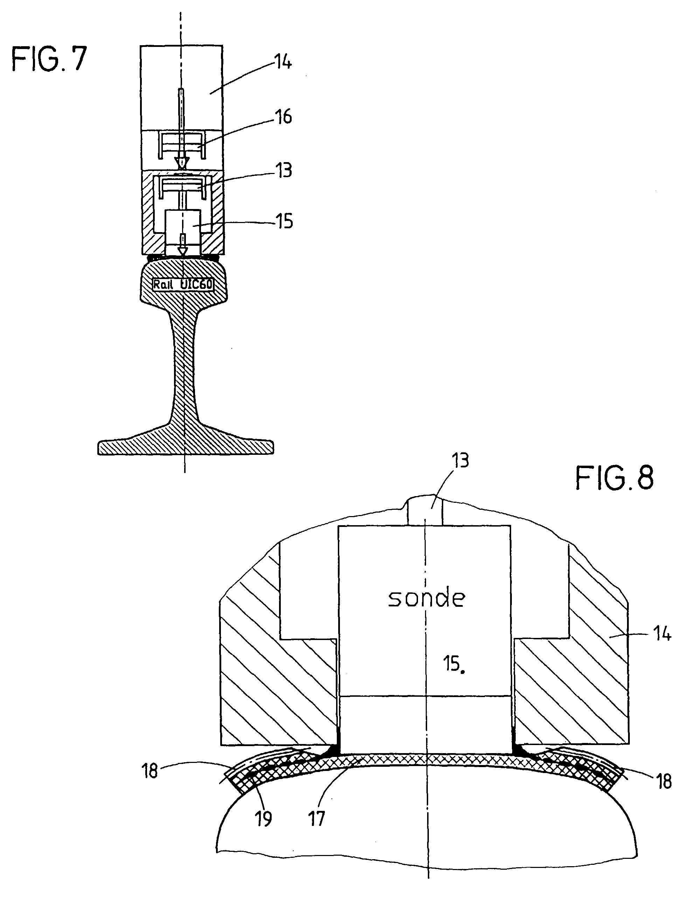

La figure 7 est une coupe à plus grande échelle suivant la ligne A-A de la figure 1.

La figure 8 est un détail à plus grande échelle de la figure 7.

Comme on le verra dans la description détaillée qui suit la caractéristique nouvelle et originale de ce dispositif de détection et/ou de mesure par ultrasons des défauts d'un rail de chemin de fer consiste à placer entre la ou les sondes et le rail à ausculter une bande ou courroie pour éviter un contact direct entre le rail et les sondes. Cette bande peut être en matière synthétique par exemple en polyamide et présenter des surfaces très lisses. Cette bande est souple de manière à pouvoir épouser les ondulations du rail.

Dans une forme d'exécution préférée, décrite ci-après, la bande est sans fin, fermée sur elle-même, passe entre les sondes et le rail puis est enroulée autour de galets et est soumise à l'action d'un rouleau tendeur. Dans une telle réalisation, lorsque le véhicule ferroviaire portant le dispositif de mesure se déplace le long de la voie, la partie de la bande située entre les sondes et le rail ne se déplace pas par rapport au rail, à l'instar d'une chenille, et les sondes glissent sur la surface lisse de la bande. Bien entendu des moyens sont prévus pour assurer un bon contact sonore entre les sondes et la bande ainsi qu'entre la bande et le rail, par exemple sous forme de films d'eau.

La forme d'exécution particulière illustrée du dispositif de détection et/ou de mesure des défauts internes d'un rail à l'aide d'ultrasons comporte un chariot porteur 1 roulant sur la voie ferrée et destiné à être relié à un véhicule ferroviaire (non illustré), généralement monté sous celui-ci, pour pouvoir être entraîné le long de la voie pour la détection ou la mesure. Ce chariot porteur 1 peut en outre être relié au châssis du véhicule ferroviaire par des moyens de relevage pour éviter que ce chariot ne roule sur la voie lors de la marche haut-le-pied du véhicule ferroviaire entre deux chantiers de mesure ou de détection, par exemple. Un ou plusieurs de ces chariots porteurs 1 peuvent être disposés sous un véhicule ferroviaire, entre ses bogies, et chacun de ces chariots porteurs 1 comporte des roues à boudins 2 à l'aide desquelles il roule et est guidé le long de la voie ferrée.

Chaque chariot porteur 1 porte au moins un chariot de mesure 3 pour chaque file de rails de la voie ferrée. Ces chariots de mesure 3 comportent un cadre 4 relié par deux vérins 5 au châssis du chariot porteur 1 à l'aide desquels ce chariot de mesure 3 peut être soit descendu en position basse de travail, soit remonté en position haute de repos.

Le chariot de mesure 3 comporte des galets d'extrémités 6 pivotés fous sur l'extrémité d'un bras 7 pivoté sur le cadre 4 et comportant une bielle 8 dont l'extrémité est reliée par un vérin à double effet 9 au cadre 4. Ainsi, en actionnant, les vérins 9 il est possible de modifier la hauteur du galet 6 correspondant par rapport au cadre 4 du chariot de mesure.

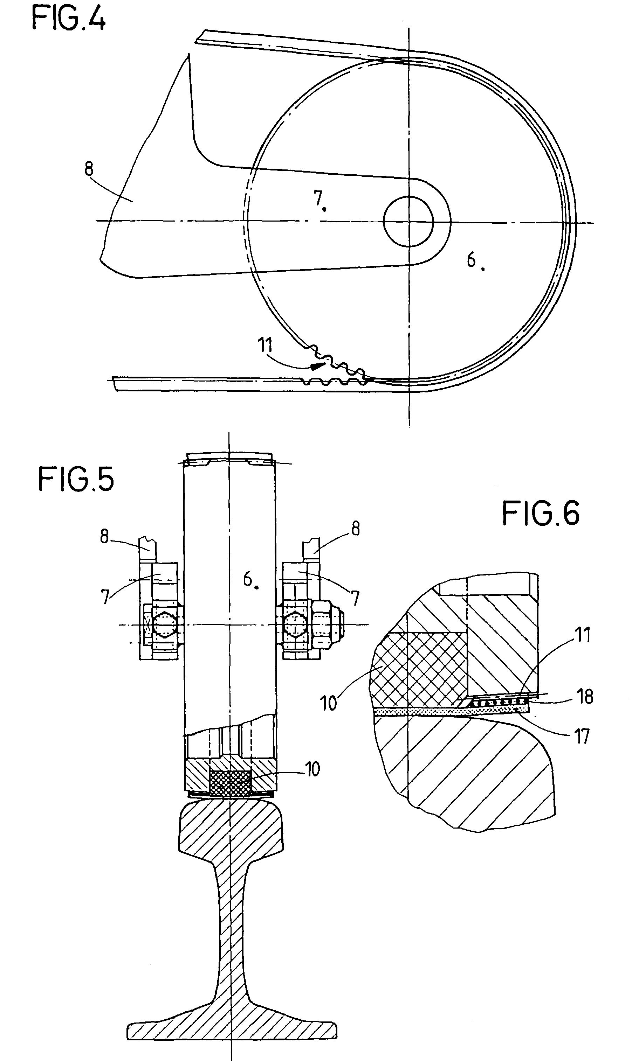

Chacun de ces galets 6 (figures 5,6) comporte une partie centrale munie d'une gorge recevant un bandage 10 en caoutchouc par exemple destiné à amortir les chocs transmis par le rail lorsque ce galet est en appui sur le rail. Les parties latérales du galet 6 sont coniques et peuvent être munies d'une denture 11.

La partie supérieure du cadre 4 du chariot de mesure est munie d'un galet tendeur 12 déplaçable verticalement par rapport au cadre 4 par exemple à l'aide d'un vérin (non représenté). La périphérie de ce galet tendeur 12 est également dentée.

La partie inférieure du cadre 4 est reliée à l'aide du vérin à double effet 13 à des patins de mesure 14 présentant chacun deux sondes ultrasonores 15.

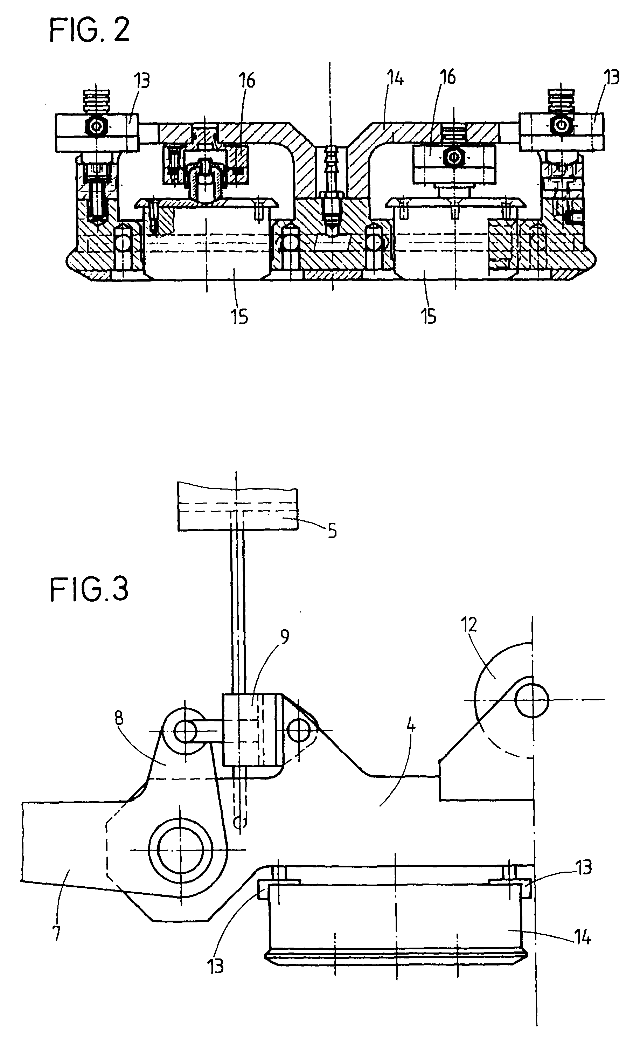

Chaque patin de mesure 14 (figure 2) porte deux sondes 15 montées coulissantes suivant un axe vertical dans le patin et soumis à l'action d'un vérin à simple effet 16 servant d'amortisseur de chocs. Ce patin 14 peut être muni d'un circuit d'amenée et de récupération d'eau pour assurer le contact sonore. Ces patins de mesure 14 ne seront pas décrits en détails car leur construction et leur fonctionnement fait l'objet des demandes de brevets CH No 1003/94 et No 3843/94) et du brevet US 5522265.

Pour éviter l'usure des sondes 15 et pour réduire encore les chocs subis par ces sondes 15 dus aux inégalités du rail et des abouts de rails ou joints le présent chariot de mesure 3 est équipé d'une bande sans fin 17 en matière synthétique lisse comme du polyacétane par exemple, et perméable aux ultrasons, disposée sous la surface inférieure des sondes et autour des galets 6,12. Cette bande sans fin 17 est munie par collage, soudure ou tout autre moyen adéquat, dans ses deux parties latérales, de courroies crantées 18 incorporant des câbles ou filins 19 qui interdisent toute élongation de la bande. Ces courroies crantées 18 engrènent avec la denture du galet 12 et éventuellement des galets 6 et empêche tout glissement de la bande 17 ainsi que sa mise en travers.

Il est évident que dans des variantes, les crans des courroies 18 peuvent être constitués par des ergots par exemple coopérant avec des organes correspondants des galets 12 et/ou 6. Par ailleurs, ces galets peuvent présenter des parties latérales lisses.

Pendant l'opération de mesure ou de détection le chariot de mesure 3 est disposé en position basse, la bande 17 vient au contact du rail. Les patins de mesure 14 sont appliqués contre la face supérieure de la bande 17 avec une force déterminée par les vérins 13 et les sondes 15 sont maintenues au contact de la surface de la bande lisse 17 par les vérins amortisseurs 16.

Lorsque le chariot porteur 1 est entraîné le long de la voie, la bande 17 reste appliquée au contact du rail et le chariot de mesure 3 se déplaçant longitudinalement il déroule la bande 17 à l'instar d'une chenille le long du rail et les sondes 15 glissent sur la surface lisse de la bande 17 sans rebonds, ni chocs, ni usure.

Le galet 6 situé dans le sens de la marche est légèrement relevé par son vérin 9 et un dispositif d'injection d'eau 20 créé un film liquide entre la bande 17 et le rail pour assurer un bon contact ultrasonore. De même, le chariot de mesure comporte encore des moyens d'injection d'eau entre la bande 17 et les patins de mesure 14 pour assurer un bon contact sonore. Ces derniers moyens peuvent être supprimés lorsque les patins de mesure 14 comportent un système d'injection d'eau incorporé.

Les principaux avantages du dispositif de mesure ultrasonore décrits sont les suivants :
a. Les sondes ne frottant plus sur le rail parfois rugueux mais sur une feuille de polyamide spécialement lisse et adaptée, l'usure des sondes est pratiquement nulle.
b. La courroie faisant office de coussin entre les sondes et le rail, les irrégularités de ce dernier (p. ex. usure ondulatoire, joints) sont filtrées et ne font plus vibrer les sondes.
c. Il en résulte une qualité de mesure et une fiabilité très nettement meilleures que celles des dispositifs antérieurs.
d. De plus tous les mouvements longitudinaux ou transversaux par ex. pour le centrage des sondes sont autorisés comme auparavant tel que décrit dans les brevets EP 0374395 et US 4689995.
e. Le levage du galet avant 6 permet d'une part de passer aisément sur les joints et d'autre part de bien lubrifier le rail.

Dans des variantes d'exécution, il est possible de concevoir que les galets 6 soient motorisés en entraînant la bande 17 ce qui a pour conséquence de provoquer un déplacement relatif entre la bande et le rail et de diminuer la vitesse du déplacement relatif entre les sondes et la bande. Une telle disposition peut être avantageuse pour augmenter la vitesse de travail tout en assurant un bon contact ultrasonore entre la sonde et le rail à travers la bande 17.

## Revendications

1. Dispositif de détection et/ou de mesure in situ et en continu par ultrasons des défauts internes d'au moins un rail d'une voie ferrée comprenant au moins une sonde (15) à ultrasons soumise à une pression tendant à la déplacer en direction du rail, caractérisé par le fait que la ou les sondes (15) prennent appui sur le rail par l'intermédiaire d'une bande (17) lisse en matière synthétique perméable aux ultrasons et par le fait que des moyens sont prévus pour créer des films liquides entre la ou les sondes et la bande ainsi qu'entre ladite bande (17) et la surface du rail.

2. Dispositif selon la revendication 1, caractérisé par le fait qu'il est montable sur un chariot porteur (1) à l'aide de vérins (5) permettant de le placer en position haute de repos ou basse de travail, ledit chariot porteur (1) étant relié à un véhicule ferroviaire.

3. Dispositif selon la revendication 1 ou la revendication 2, caractérisé par le fait qu'il comporte un chariot de mesure (3) comportant à chacune de ses extrémités un galet d'extrémité (6) et sur sa face supérieure un galet tendeur (12), par le fait qu'il comporte encore, monté à l'aide de vérins d'appui (13), un patin de mesure (14) comportant au moins une sonde (15) à ultrasons et par le fait qu'une bande (17) en matière synthétique sans fin est tendue sur lesdits galets (6, 12) et les surfaces de mesure des sondes (15).

4. Dispositif selon la revendication 3, caractérisé par le fait que les galets d'extrémités (6) sont articulés sur un cadre (4) du chariot de mesure (3) pour pouvoir être relevé par rapport au plan du rail.

5. Dispositif selon la revendication 3 ou la revendication 4, caractérisé par le fait que la bande (17) sans fin comporte sur ses parties latérales des courroies crantées (18).

6. Dispositif selon la revendication 5, caractérisé par le fait que les parties latérales des galets d'extrémité (6) sont dentées et que ces parties latérales sont coniques allant en se rétrécissant vers l'extérieur, et par le fait que la partie centrale de ces galets est munie d'un bandage (10) élastique.

7. Dispositif selon la revendication 6, caractérisé par le fait que les courroies crantées comportent des câbles ou filins (19) incorporés.

8. Dispositif selon la revendication 5, caractérisé par le fait que les galets d'extrémités (6) sont libres ou entraînés en rotation.

9. Dispositif selon la revendication 5, caractérisé par le fait que les crans des courroies coopèrent avec des organes correspondants aux galets d'extrémités (6) et/ou au galet tendeur (12).

## Claims

1. A device for detecting and / or measuring continuously in situ, through the use of ultrasounds, the internal defects of at least one rail of a railway line, including at least one ultrasonic sensor (15) subjected to a pressure urging the same to move in the direction of the rail, characterised in that the at least one sensor (15) presses against the rail through a smooth belt (17) made of a synthetic material permeable to ultrasounds and in that means are provided for creating liquid films 1a between the at least one sensor and the belt, as well as between said belt (17) and the surface of the rail.

2. A device according to claim 1, characterised in that it can be mounted on a carrier buggy (1) by means of cylinders (5) which make it possible to move the same to a high rest position or to a low working position, said carrier buggy (1) being connected to a railway vehicle.

3. A device according to claim 1 or claim 2, characterised in that it includes a measuring buggy (3) including at each one of its ends an end roller (6) and on its upper side a tensioning roller (12), in that it further includes, mounted via biasing cylinders (13), a measuring shoe (14) including at least one ultrasonic sensor (15) and in that an endless belt (17) made of a synthetic material is tensioned between said rollers (6, 12) and against the measure surfaces of the sensors (15).

4. A device according to claim 3, characterised in that the end rollers (6) are mounted hingedly on a frame (4) of the measure buggy (3) so that they may be lifted above the plane of the rail.

5. A device according to claim 3 or claim 4, characterised in that the endless belt (17) carries on its sides strips (18) which are serrated.

6. A device according to claim 5, characterised in that the side parts of the end rollers (6) are serrated, in that these side parts are conical and tapered outwardly, and in that the central part of these rollers is provided with a resilient band (10).

7. A device according to claim 6, characterised in that the serrated strips include cables or cords (12) incorporated therein.

8. A device according to claim 5, characterised in that the end rollers (6) are free to rotate or are driven in rotation.

9. A device according to claim 5, characterised in that the serrations of the strips co-operate with corresponding structures on the end rollers (6) and / or on the tensioning roller (12).

## Patentansprüche

1. Vorrichtung zur kontinuierlichen in-situ-Ultraschall-Erfassung und/oder -Messung von internen Fehlern von zumindest einer Schiene eines Bahngleises mit zumindest einer Ultraschallsonde (15), die einem Druck ausgesetzt ist, der sie zur Schiene hin zu bewegen sucht, dadurch gekennzeichnet, dass die Sonde oder Sonden (15) über ein ultraschalldurchlässiges glattes Band (17) aus Kunststoff auf der Schiene aufliegen, und dadurch, dass Organe vorgesehen sind, um Flüssigfilme zwischen der Sonde oder den Sonden und dem Band sowie zwischen besagtem Band (17) und der Schienenoberfläche zu schaffen.

2. Vorrichtung nach Anspruch 1, dadurch gekennzeichnet, dass sie mit Hilfe von Winden (5), die es gestatten, sie in eine Ruhe-Hochstellung oder eine Arbeits-Tiefstellung zu bringen, an einem Tragschlitten (1) montiert werden kann, wobei der benannte Tragschlitten (1) mit einem Eisenbahnfahrzeug verbunden ist.

3. Vorrichtung nach Anspruch 1 oder Anspruch 2, dadurch gekennzeichnet, dass sie einen Messwagen (3) umfasst, der an jedem seiner Enden eine Endrolle (6) und auf seiner Oberseite eine Spannrolle (12) umfasst, dadurch, dass sie weiter einen mit Hilfe von Stützwinden (13) montierten Messschuh (14) mit zumindest einer Ultraschallsonde (15) umfasst, und dadurch, dass ein endloses Kunststoffband (17) zwischen den benannten Winden (6, 12) und den Messoberflächen der Sonden (15) eingespannt ist.

4. Vorrichtung nach Anspruch 3, dadurch gekennzeichnet, dass die Endrollen (6) beweglich an einem Rahmen (4) des Messwagens (3) befestigt sind, um bezüglich der Schienenebene angehoben werden zu können.

5. Vorrichtung nach Anspruch 3 oder Anspruch 4, dadurch gekennzeichnet, dass das endlose Band (17) gerippte Riemen (18) auf seinen seitlichen Partien umfasst.

6. Vorrichtung nach Anspruch 5, dadurch gekennzeichnet, dass die seitlichen Partien der Endrollen (6) gezahnt und sind und dass sich diese seitlichen Partien nach aussen hin konisch verengen, und dadurch, dass der zentrale Abschnitt dieser Rollen mit einem elastischen Mantel (10) ausgerüstet ist.

7. Vorrichtung nach Anspruch 6, dadurch gekennzeichnet, dass die gerippten Partien eingearbeitete Kabel oder Seile (19) umfassen.

8. Vorrichtung nach Anspruch 5, dadurch gekennzeichnet, dass die Endrollen (6) frei laufen oder in Umdrehung versetzt werden.

9. Vorrichtung nach Anspruch 5, dadurch gekennzeichnet, dass die Riemenkerben mit entsprechenden Organen an den Endrollen (6) und/oder an der Spannrolle (12) zusammenwirken.
